(19) Europäisches Patentamt
European Patent Office
Office européen des brevets

(11) **EP 2 958 001 A1**

(12) **EUROPEAN PATENT APPLICATION**
published in accordance with Art. 153(4) EPC

(43) Date of publication:
**23.12.2015 Bulletin 2015/52**

(51) Int Cl.:
***G06F 3/048*** *(2013.01)*     ***G06F 17/30*** *(2006.01)*

(21) Application number: **13883199.5**

(22) Date of filing: **31.12.2013**

(86) International application number:
**PCT/CN2013/091003**

(87) International publication number:
**WO 2014/173168 (30.10.2014 Gazette 2014/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.04.2013 CN 201310147875**

(71) Applicant: **Xiaomi Inc.**
**Beijing 100085 (CN)**

(72) Inventors:
• **LUO, Aibao**
**Beijing 100085 (CN)**
• **FANG, Liu**
**Beijing 100085 (CN)**
• **FANG, Yuan**
**Beijing 100085 (CN)**

(74) Representative: **Sadler, Peter Frederick**
**Reddie & Grose LLP**
**16 Theobalds Road**
**London WC1X 8PL (GB)**

(54) **APPLICATION SOFTWARE DISPLAYING METHOD AND DEVICE**

(57) Disclosed are an application software displaying method and device. The main content comprises: acquiring, within a set time, at least two parameter factors used for characterizing application information of application software, obtaining a sequence factor of the application software through calculation according to the acquired at least two parameter factors, and sequencing the application software according to the sequence factor, and displaying the sequenced application software, thereby not only avoiding amount of the application software, but also avoiding a problem of inaccurate sequencing of the application software caused by malicious rating. Therefore, practicability of the application software within a set time can be reflected truly, efficiency for a user to choose the application software can be improved, and network resources can be saved.

Fig. 1

## Description

## CROSS-REFERENCE TO RELATED APPLICATIONS

This application is based on and claims priority to Chinese Patent Application No.201310147875.X, filed on April 25, 2013, the entire contents of which are incorporated herein by reference.

## TECHNICAL FIELD

The present disclosure generally relates to the field of the Internet information technology, and more particularly, to application software displaying method and device.

## BACKGROUND

With the development of Internet technology, ever-growing amounts of information are available from the Internet, such as downloading texts, music and various kinds of application software (e.g., office program, player program) and so on. However, there is more than one application software with a same purpose issued on Internet. When there are multiple application softwares with the same purpose on Internet, it is an important issue to choose and download one of the application softwares.

In order to facilitate users to choose needed application software, Internet operators generally present application softwares as being sorted according to a preset order, which provides users with a basis for choosing application software.

Preferably, the method for sorting application softwares according to a preset sort order comprises following two sort orders.

The first sort order is based on download counts of application softwares.

It is preferable to make a statistics of download counts of application softwares within a set period, and sort application softwares on the basis of statistical results in a descending order of download counts of the application softwares for presentation.

The download counts of application softwares reflect demands for the application software to some extent. Rise of download counts of an application software indicates increase of user share (or demands) of the application software. Therefore, it is possible to provide users with really needed application software by sorting and presenting application softwares according to their download counts.

However, in a cycle from release to mature application of an application software, download counts of the application software may conform to such a rule that it may increase gradually and then tend to be stable. Presentation of application softwares on Internet may vary as download counts of the application softwares change. As time goes on, when download counts of multiple application softwares are tending to be stable, the download counts of these application softwares may be reduced within a set period, thus rank of presentation for these application softwares may shift backward. Therefore, those application softwares presented close to the top which are sorted according to download counts may be newly released. Those application softwares developed at an earlier time with higher download counts may be presented far from the top. Thus it can be seen that this sort order cannot well reflect the practicability of application softwares, with relatively low flexibility in presenting the application softwares, and further may reduce user efficiency in choosing application software.

The second sort order is based on cumulative scores of application softwares.

After being downloaded, an application software may be evaluated (generally in a form of scoring) by users in a process of using. Accordingly, it is preferable to make a statistics of score results of application softwares within a set period, and sort the application softwares, according to the statistical results, in a descending order of the score results for presentation.

However, scoring is subjective and malicious scoring often appears. It is unable to well reflect the practicability of application softwares by sorting them merely based on the scoring. Furthermore, users may be misguided in downloading application softwares sorted and presented on the basis of the score results in a descending order, that is, an application software downloaded may be not a desirable application software, thus leading to relatively lower efficiency in downloading application softwares and waste of network resources.

Thus it can be seen that a method for presenting application softwares is desperately needed for solving the problem that waste of network resources and relatively low efficiency in downloading application softwares may be resulted from disordered presentation of the application softwares with relatively low flexibility.

## SUMMARY

The embodiments of the present disclosure provide an application software displaying method and a device thereof, for solving the problem that waste of network resources and relative low efficiency in downloading application software may be resulted from disordered presentation of the application software with relatively low flexibility.

On one hand, an application software displaying method is provided, comprising:

    acquiring at least two parameter factors indicating application information about the application software within a set period;
    deriving a sorting factor for the application software by a calculation based on the at least two parameter factors acquired; and
    sorting the application software according to the sorting factor and presenting the application software sorted.

On the other hand, an application software displaying method, comprising:

an acquisition module, configured to acquire at least two parameter factors indicating application information about the application software within a set period;

a calculation module, configured to derive a sorting factor of the application software by a calculation based on the at least two parameter factors acquired; and

a sorting module, configured to sort the application software according to the sorting factor and present the application software sorted.

Some beneficial effects of the present disclosure may include:

In the embodiments of the present disclosure, at least two parameter factors indicating application information about an application software within a set period may be acquired, a sorting factor of the application software may be derived by a calculation according to the at least two parameter factors acquired, and the application software may be presented after being sorted according to the sorting factor. Thus, the sorting factor of the application software can be determined according to the parameter factors indicating application information about the application software before presenting the application software. It is different from sorting an application software merely on the basis of download counts, thus avoiding the problem of backward shift of ranking of an application software due to deviation of download counts of the application software resulted from time factor. Furthermore, it is different from sorting an application software merely on the basis of score values of the application software downloaded, thus avoiding the problem of low present flexibility and inaccurate ranking of the application software resulted from malicious scoring. Not only can it really reflect the practicality of application softwares within a set period, but it can also improve user efficiency in selecting application softwares and save network resources.

It will be appreciated that both the foregoing general description and the following detailed description are exemplary and explanatory only and are not restrictive of the disclosure.

## BRIEF DESCRIPTION OF THE DRAWINGS

Fig. 1 is a flowchart of a method for presenting application software according to Embodiment I of the present disclosure.
Fig. 2 is a flowchart of a method for presenting application software according to Embodiment II of the present disclosure.
Fig. 3 is a schematic diagram showing daily download count values of three determined application softwares (B1, B2 and B3) within the latest 30 days prior to the current time point.
Fig. 4 is a block diagram showing scoring factors after downloading of three determined application softwares (B1, B2 and B3) within a set period.
Fig. 5 shows block diagrams of different sorting factors obtained for three application softwares (B1, B2 and B3) with and without consideration to the scoring factor after downloading, respectively.
Fig. 6 is a block diagram of a device for presenting application software according to Embodiment III of the present disclosure.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

## DETAILED DESCRIPTION

In order to implement the present disclosure, the embodiments of the present disclosure provide a method for presenting application software and a device thereof, in which at least two parameter factors indicating application information about application software are acquired within a set period, a sorting factor of the application software is derived by a calculation according to the at least two parameter factors acquired, then the application software is presented after being sorted according to the sorting factor. Thus, the sorting factor of the application software can be determined according to the parameter factors indicating application information about the application software before presenting the application software. It is different from sorting an application software merely on the basis of download counts, thus avoiding the problem of backward shift of ranking of an application software due to deviation of download counts of the application software resulted from time factor. Furthermore, it is different from sorting an application software merely on the basis of score values of the application software downloaded, thus avoiding the problem of low present flexibility and inaccurate ranking of the application software resulted from malicious scoring. Not only can it really reflect the practicality of application softwares within a set period, but it can also improve user efficiency in selecting application softwares and save network resources.

Description of various embodiments in the present disclosure will be made in detail in combination with drawings of specification.

Embodiment I

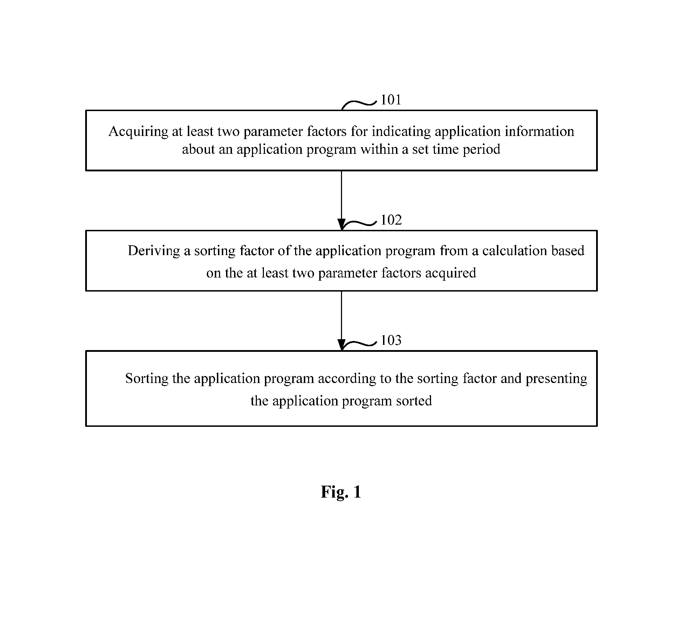

As shown in Fig. 1, which is a flowchart of a method for presenting application software according to Embodiment I of the present disclosure, the method includes:

In step 101, it is acquired at least two parameter factors for indicating application information about an application software within a set time period.

In step 101, in order to guarantee that the application software recommended to users can best meet their requirements, it is necessary to sort the application software recommended to users. Accordingly, related research emphasis on how to sort the application software and what is the sorting basis. Therefore, at least two parameter factors for indicating application information about the application software within a set time period are acquired from a background database corresponding to the application software to be sorted.

Wherein, the set time period may be either a time cycle determined according to a life cycle of the application software or a time cycle acquired from experimental results, such as one month, one quarter, N days (N is a natural number) and the like, or a time period set in days or in hours and the like.

The application information about the application software refers to downloads and use condition of the application software, etc.

The step of acquiring at least two parameter factors for indicating application information about an application software within a set time period refers to acquiring the at least two parameter factors of the application information within such a time period that is antedated from a current time point by the set time period.

For example, if the set time period is one month, the acquiring at least two parameter factors for indicating application information about an application software within a set time period refers to acquiring parameter information corresponding to the at least two parameter factors for indicating the application information about the application software, which is generated within one past month from the current time point.

More preferably, the acquiring at least two parameter factors for indicating application information about an application software within a set time period includes but is not limited to: acquiring a download count factor for indicating downloads of the application software and a scoring factor for indicating use condition of the application software.

For acquiring the download count factor for indicating downloads of the application software, the method includes:

acquiring a download count value of the application software within the set time period, and performing a half-life processing of the download count value according to a half-life principle involving the download count factor of the application software, thus obtaining the download count factor for indicating application information about the application software within the set time period.

As time goes on, the download count factor of the application software may be influenced in such a manner of the half-life principle that a value corresponding to the download count factor may tend to be stable. Therefore, after acquiring a download count value of the application software within the set time period, it is necessary to determine how far the download count factor of the application software within the set time period is influenced by the half-life principle; that is, to perform a half-life processing of the download count value according to the half-life principle of the download count factor of the application software, or to determine a half-life factor of the download count factor of the application software within the set time period according to a corresponding relationship between a time factor and the half-life factor of the download count factor of the application software, so as to adjust the download count value by using the determined half-life factor.

For example, supposing that the half-life factor of the download count factor of the application software within the set time period (T) is $(1/2)^T$ and the download count value of the application software within the set time period is D, a half-life processing of the download count value may be performed according to the half-life principle of the download count factor of the application software, so as to obtain the download count factor $D*(1/2)^T$ for indicating application information about the application software within the set time period.

The step of acquiring a scoring factor for indicating use condition of the application software within the set time period includes:

making a statistics of score values of the application software within the set time period, and adjusting the score values obtained from the statistics according to a preset score threshold value, thus obtaining the scoring factor for indicating application information about the application software within the set time period.

Wherein, the preset score threshold value may either be determined according to actual need or be determined according to experimental results, which is not limited herein.

In step 102, a sorting factor of the application software is derived from a calculation according to the at least two parameter factors acquired.

In step 102, after the at least two parameter factors of the application software are acquired, a multiplication of the at least two parameter factors acquired is performed and the value obtained is taken as a sorting factor of the application software.

In step 103, the application software is sorted according to the sorting factor and the application software sorted is presented.

In Step 103, the step of sorting the application software according to the sorting factor includes:

sorting factors may be derived, respectively for a plurality of different application softwares, from the calculation by using Steps 101 - 102, and such derived sorting factors may be sorted in a descending order of their numeric values.

Otherwise, after a sorting factor of the application software is derived from the calculation by using Steps 101 - 102, the sorting factor derived may be compared with sorting factors of application softwares yet sorted, and, based on the comparative results, the sort order of the application software to be sorted in the application software sequence may be determined, then the application software to be sorted may be inserted according to the determined sort order.

The step of presenting the application software sorted may include:

> presenting identification information of each application software sorted according to a sort order.

By means of the solution provided by Embodiment I of the present disclosure, at least two parameter factors for indicating application information about application software are acquired within a set time period, a sorting factor of the application software is derived from a calculation according to the at least two parameter factors acquired, then the application software is presented after being sorted according to the sorting factor. Thus, the sorting factor of the application software can be determined according to the parameter factors for indicating application information about the application software before presenting the application software. It is different from sorting an application software merely on the basis of download counts, thus avoiding the problem of backward shift of ranking of an application software due to deviation of download counts of the application software resulted from time factor. Furthermore, it is different from sorting an application software merely on the basis of score values of the application software downloaded, thus avoiding the problem of low present flexibility and inaccurate ranking of the application software resulted from malicious scoring. Not only can it really reflect the practicality of application softwares within a set period, but it can also improve user efficiency in selecting application softwares and save network resources.

Embodiment II

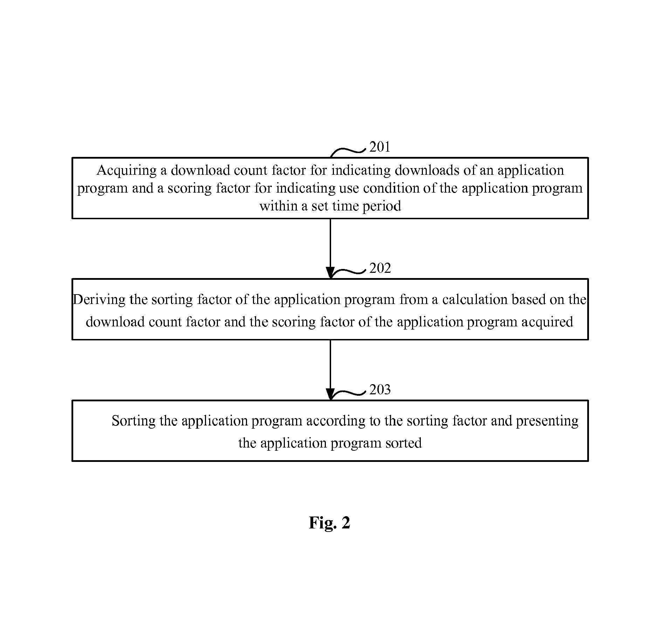

As shown in Fig. 2, which is a flowchart of a method for presenting application software according to Embodiment II of the present disclosure, the Embodiment II of the present disclosure providing detailed description of the Embodiment I of the present disclosure, the method includes:

In step 201, it is acquired a download count factor for indicating downloads of an application software and a scoring factor for indicating use condition of the application software within a set time period.

Preferably, in step 201, a method for acquiring the download count factor for indicating downloads of the application software within the set time period includes:

> firstly, acquiring a download count value of the application software within the set time period.

It is preferable to divide the set time period into a plurality of time slots and determine a download count value of the application software within each time slot divided.

Preferably, dividing the set time period into a plurality of time slots includes but is not limited to: dividing the set time period into a plurality of time slots with a same time span (for example, 24 hours for each time slot) and dividing the set time period into a plurality of time slots with different time spans (for example, 6 hours for one time slot, and 12 hours for another time slot, and the like).

For example, if the set time period is one past month (30 days), the set time period may be divided into 30 time slots (starting from the current time point, every 24 hours is regarded as a time slot), and the download count value of the application software within each time slot may be determined as: $d_1,d_2,...,d_i,....d_{30}$, wherein, $d_1$ is the download count value of the application software within the first 24 hours from the current time point, and $d_i$ is the download count value of application software within the ith 24 hours from the current time point.

It should be explained that the nearer to the current time point, the larger the acquired download count value.

It should be explained that the acquired download count value referred in the present disclosure is made a statistics regarding to downloading behaviors of different users, and when a singer user conducts multiple downloading behaviors regarding to a same application software, a statistics of the download count value corresponding to the user's multiple downloading behaviors is made only once. In this way, it is possible to effectively avoid inaccurate recommendation of application softwares if there is a certain application software being downloaded by a same user maliciously.

More preferably, the method for determining a download count value of the application software within each time slot divided may further include:

> making a statistics of the download count value and a download link of the application software within each time slot divided, and adjusting the download count value obtained from the statistics according to the download link obtained from the statistics, thus obtaining the download count value of the application software within each time slot divided.

Preferably, taking one of time slots as an example, the download count value of an application software may also be influenced by the download link. For example, the application software may be acquired from a website address provided by the application software publisher or from other equipment in which the application software has been downloaded. It can be seen that the download count value of the application software may be truly indicated by acquiring the download count value of the application software from the website address provided by the application software publisher. However, the download count value of the application software may be indicated indirectly by acquiring the download count value of the application software from other equipment in which the application software has been downloaded, which may possibly involve with repetition thus may be lower in data accuracy. Therefore, a statistics may be made with respect to both the download count value and the download link of the application software within the time slot.

According to the corresponding relationship between a download link and a download count value adjustment parameter, it is possible to determine the download count value adjustment parameter corresponding to the download link, and to adjust a download count value acquired from statistics by using the determined download count value adjustment parameter, thus acquiring a download count value of the application software within each time slot divided.

Wherein, a download count value adjustment parameter corresponding to a direct download link may be greater than a download count value adjustment parameter corresponding to an indirect download link.

It should be explained that factors influencing the download count value adjustment parameter include but are not limited to: a quantity of application softwares presented in a single page of Internet pages, a sequence of searching application softwares by users, and so on.

Secondly, performing a half-life processing of the download count value according to a half-life principle of the download count factor of the application software, thus obtaining the download count factor for indicating application information about the application software within the set time period.

Preferably, in the first step, a half-life value of the application software corresponding to each time slot may be determined.

For example, the method for determining a half-life value of the application software corresponding to each time slot may be achieved by the following formula: the half-life value of the application software corresponding to the ith time slot is $(1/2)^{(i/T)}$, wherein, T stands for a half-life cycle.

In the second step, a download count factor of the application software within each time slot may be derived from a calculation based on the determined download count value of the application software within each time slot and the half-life value of the application software corresponding to each time slot.

For example, it is determined that the download count value of the application software within the ith time slot is Di and the half-life value of the application software corresponding to the ith time slot is $(1/2)^{(i/T)}$, then the download count factor of the application software within the ith time slot is $Di*(1/2)^{(i/T)}$.

In the third step, the download count factor for indicating application information about the application software within the set time period may be obatined according to the download count factor of the application software within each time slot derived from the calculation.

Preferably, the download count factor for indicating application information about the application software within the set time period may be derived from the following formula:

$$D(A) = \sum_{i=1}^{m} (d_i * (\frac{1}{2})^{(\frac{i}{T})}) \quad ;$$

Wherein, D(A) stands for the download count factor of the application software A within the set time period, m stands for a length of the set time peiord, $d_i$ stands for the download count value of the application software within the ith time slot, T stands for the half-life cycle of the download count factor of the application software, and i stands for the number (ranging from 1 to m) of time slots divided from the current time point.

It should be explained that mass data research shows that a variation trend of the download count value of an application software meets the half-life effect principle, and half-life cycles of the download counts of application softwares may vary depending on different application scenarios. For example, some application softwares may have a half-life cycle of 1, while some other application softwares may have a half-life cycle of 2. Therefore, T shall be determined according to the application scenarios.

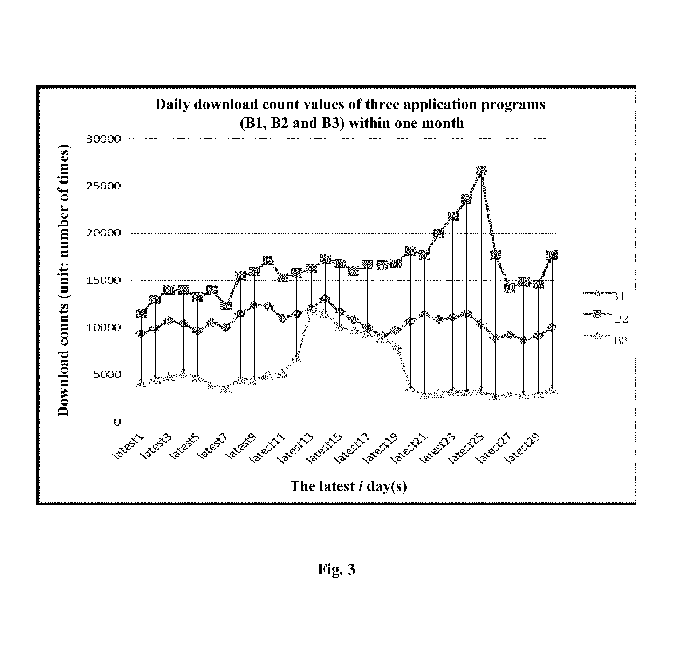

As shown in Fig. 3, it is a schematic diagram showing daily download count values of three determined application softwares (B1, B2 and B3) within the latest 30 days from the current time point. Wherein, download count values are calculated by taking a number of times as a unit.

Preferably, the method for acquiring a scoring factor for indicating use condition of the application software within the set time period may include:

making a statistics of score values of the application software within the set time period, and adjusting the score values obtained from the statistics according to a preset score threshold value, thus obtaining the scoring factor for indicating application information about the application software within the set time period.

Preferably, in the first step, score values of the application software fed back by users within the set time period may be received, and an average value of the score values of the application software within the set time period may be derived from a calculation according to the score values received.

For example, it is received score values ($Z_1$, $Z_2$, ......, $Z_n$) of the application software fed back by users within the set time period (30 days), and it is calculated the average value of the score values of the application software within the set time period: [Z1+Z2+......+Zn]/n, wherein n = 30.

It should be explained that the score values of the application software referred in the present disclosure is acquired by making a statistics of scoring behaviors from different users, and when a same user conducts multiple scoring behaviors regarding to a same application software, the score values corresponding to the user's multiple scoring behaviors may be determined as one of score values or a comprehensive value of multiple score values. In this way, it is possible to effectively prevent other users from being misguide if there is a certain application software being scored by a same user maliciously.

In the second step, the average value may be adjusted according to a score threshold value of the application software set by default, thus obtaining the scoring factor for indicating use condition of the application software within the set time period.

Preferably, a first method for acquiring the scoring factor for indicating use condition of the application software within the set time period may include: taking a ratio of the average value to the score threshold value as the scoring factor for indicating application information about the application software within the set time period.

For example, the score threshold value of the application software set by default is M and the average value of score values of the application software within the set time period derived from the calculation according to the score values received is R, then the scoring factor for indicating application information about the application software within the set time period is R/M.

A second method for acquiring the scoring factor for indicating use condition of the application software within the set time period may include following steps.

In the first step, a reference score threshold value may be obtained by adjusting the score threshold value of the application software set by default according to a preset coefficient.

For example, if the preset coefficient is 0.6, the reference score threshold value obtained is 0.6*M.

In the second step, the average value may be compared with the reference score threshold value obtained.

In the third step, the scoring factor for indicating use condition of the application software within the set time period may be determined according to comparative results.

Preferably, a first preset value may be taken as the scoring factor for indicating use condition of the application software within the set time period when the average value is not less than the reference score threshold value, while the ratio of the average value to the score threshold value may be taken as the scoring factor for indicating use condition of the application software within the set time period when the average value is less than the reference score threshold value.

For example, when R is not less than 0.6*M, the scoring factor for indicating use condition of the application software within the set time period is the first preset value.

When R is less than 0.6*M, the scoring factor for indicating use condition of the application software within the set time period is R/M.

It should be explained that the first preset value may be determined according to actual need or obtained from experiments.

By adjusting directly acquired score values of the application software fed back by users in the way described above, it is possible to avoid users' subjectivity on the application software so that the scoring factor may reflect the practicability of the application software more objectively.

More preferably, the method for determining the scoring factor for indicating use condition of the application software within the set time period may further include: establishing a scoring factor function $f(M, R)$ for indicating use condition of the application software, and determining the scoring factor for indicating use condition of the application software within the set time period according to the following formula:

$$P(A) = f(M, R) ;$$

wherein, P(A) stands for the scoring factor of application software A within the set time period, M stands for the score threshold value of the application software set by default, and R stands for the average value of score values of the application software derived from calculation, $f(M,R)=R/M$ or

$$f(M,R) = \begin{cases} 1, (R \geq 0.6*M) \\ R\!\!\Big/\!\!M, (R \prec 0.6*M) \end{cases}.$$

It should be explained that the function f for determining the scoring factor is not limited to the function mentioned in Embodiment II of the present disclosure as long as it can indicate the variation of the scoring factor after downloading, which is not limited herein.

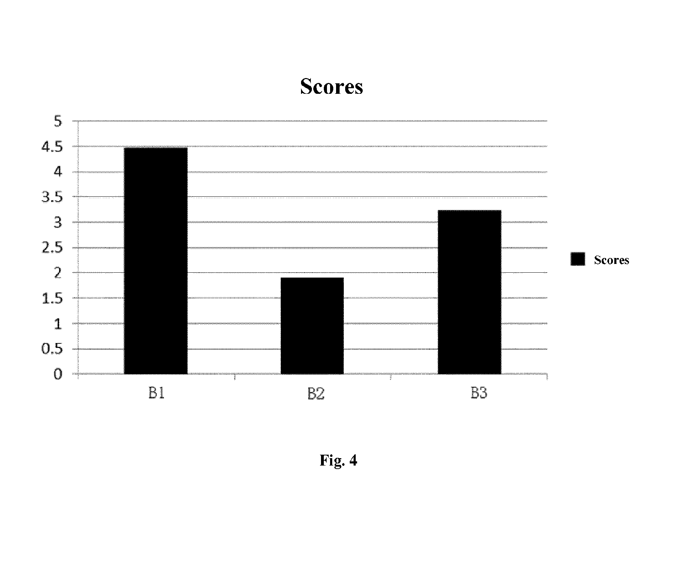

As shown in Fig. 4, it is a block diagram showing scoring factors after downloading of three determined application softwares (B1, B2 and B3) within a set time period. Wherein, M is a positive number larger than 0 and smaller than 5.

In step 202, it is derived the sorting factor of the application software from a calculation by using the download count factor and the scoring factor of application software acquired.

Preferably, in step 202, a multiplication of the at least two parameter factors acquired may be performed and a value obtained may be taken as the sorting factor of the application software.

Preferably, the sorting factor of the application software may be derived from a calculation by the following formula:

$$S(A) = S\ (A)^* \ P(A)\ ;$$

Wherein, S(A) stands for the sorting factor of the application software, D(A) stands for the download count factor of the application software A within the set time period obtained, and P(A) stands for the scoring factor of the application software A within the set time period.

In step 203, the application software is sorted according to the sorting factor and the application software sorted is presented.

Preferably, in step 203, the application software may be sorted according to a descending order of the sorting factor.

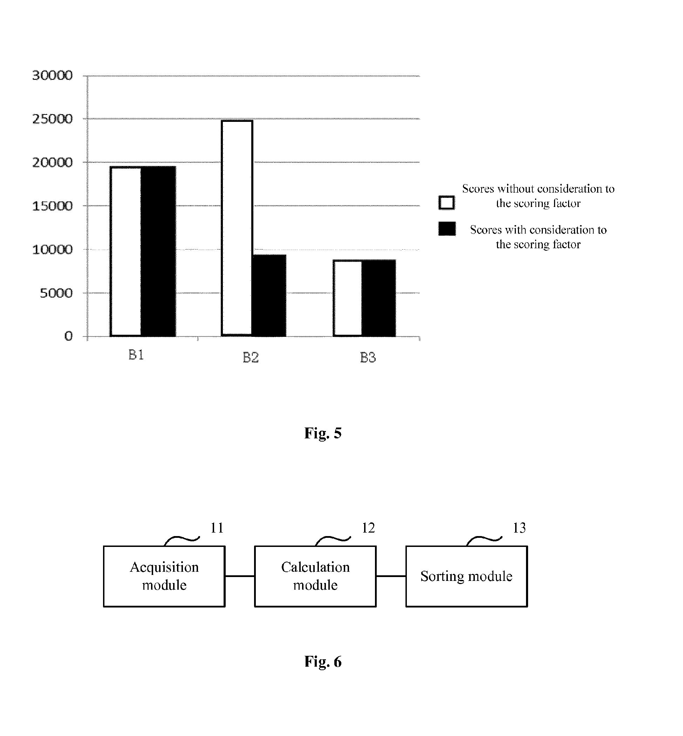

As shown in Fig. 5, it shows structure diagrams of different sorting factors obtained for three application softwares (B1, B2 and B3) with and without consideration to the scoring factor after downloading, respectively.

By means of the solution provided by Embodiment II of the present disclosure, it is possible not only to truly reflect the practicality of an application software within a set time period, but also to improve the efficiency for user in selecting application softwares so that network resources may be saved. Moreover, it may be prevented from presenting application softwares by cheating.

Embodiment III:

As shown in Fig. 6, it is a block diagram of a device for presenting application software according to Embodiment III of the present disclosure. The device includes: an acquisition module 11, a calculation module 12 and a sorting module 13, wherein:

  the acquisition module 11 is configured to acquire at least two parameter factors indicating application information about the application software within a set period;
  the calculation module 12 is configured to derive a sorting factor of the application software by a calculation based on the at least two parameter factors acquired; and
  the sorting module 13 is configured to sort the application software according to the sorting factor and present the application software sorted.

Preferably, the parameter factor includes a download count factor; and the acquisition module 11 is further configured to acquire a download count value of the application software within the set period, and performing a half-life processing of the download count value according to a half-life principle involving the download count factor of the application software, thus obtaining the download count factor indicating the application information about the application software within the set period.

Preferably, the acquisition module 11 is further configured to divide the set period into a plurality of time slots and determine a download count value of the application software within each time slot acquired by the dividing, to determine a half-life value of the application software corresponding to each time slot, to obtain a download count factor of the application software within each time slot by a calculation based on the determined download count value of the application software within each time slot and a half-life value of the application software corresponding to each time slot, and to obtain the download count factor indicating the application information of the application software within the set period according to the download count factor of the application software within each time slot derived by the calculation.

Preferably, the acquisition module 11 is further configured to make a statistics of the download count value and a download link of the application software within each time slot acquired by the dividing, and adjust the download count value obtained from the statistics according to the download link obtained from the statistics, thus obtaining the download count value of the application software within each time slot acquired by the dividing.

Preferably, the parameter information also includes a scoring factor; and the acquisition module 11 is further configured to make a statistics of score values of the application software within the set period, and adjust the score values obtained from the statistics according to a preset score threshold value, thus obtaining the scoring factor indicating the application information about the application software within the set period.

Preferably, the acquisition module 11 is further configured to receive score values of the application software fed back from users within the set period, and derive an average value of the score values of the application software within the set period by a calculation based on the score values received, and to adjust the average value according to the preset score threshold value of the application software set by default, thus obtaining the scoring factor indicating the application information about the application software within the set period.

Preferably, the acquisition module 11 is further configured to take a ratio of the average value to the score threshold value as the scoring factor indicating the application information about the application software within the set period; or
to obtain a reference score threshold value by adjusting the preset score threshold value of the application software set by default according to a preset coefficient, to compare the average value with the reference score threshold value obtained, and to take a first preset value as the scoring factor indicating the application information about the application software within the set period when the average value is not less than the reference score threshold value, and take the ratio of the average value to the score threshold value as the scoring factor indicating the application information about the application software within the set period when the average value is less than the reference score threshold value.

Preferably, the sorting module 13 is further configured to perform a multiplication of the at least two parameter factors and taking a value obtained by the multiplication as the sorting factor of the application software.

Preferably, the sorting module 13 is further configured to sort the application software according to a descending order of the sorting factor.

Those skilled in the art shall understand that the embodiments of the present disclosure may be provided as a method, a device (equipment) or a computer program product. Therefore, the present disclosure may adopt the form of complete hardware embodiments, complete software embodiments or embodiments in combination of software and hardware. Furthermore, the present disclosure may adopt the form of implementing a computer program product on one or more computer storage media (including but not limited to a magnetic disk memory, a CD-ROM, or an optical memory, and the like) including computer program codes.

The present disclosure is described in reference to the flowchart and/or block diagram of a method, a device (equipment) or a computer program product according to the embodiments of the present disclosure. It is to be understood that each flow and/or block in the flowchart and/or block diagram as well as combination of flow and/or block in the flowchart and/or block diagram may be realized by computer program instructions. These computer program instructions may be provided to a general purpose computer, a special purpose computer, an embedded processor or processors of other programmable data processing equipment so as to generate a machine so that such a device configured to achieve functions designated in one or more flows of the flowchart and/or in one or more blocks of the block diagram is generated by means of instructions executed by computers or processors of other programmable data processing equipment.

These computer program instructions may be stored in a computer-readable memory which can lead a computer or other programmable data processing equipment to work in a particular way so that instructions stored in the computer-readable memory may generate a manufactured product including a command device which can achieve functions designated in one or more flows of the flowchart and/or in one or more blocks of the block diagram.

These computer program instructions may also be loaded onto computers or other programmable data processing equipment so that a series of operation steps are executed on the computers or other programmable equipment to generate a processing achieved by computers, thus providing steps for achieving functions designated in one or more flows of the flowchart and/or in one or more blocks of the block diagram by means of instructions executed by computers or other programmable equipment.

Although preferred embodiments of the present disclosure have been described, those skilled in the art may make an additional alteration and modification to these embodiments once they learn about basic creative concepts. Therefore, the appended claims are intended to be interpreted as including preferred embodiments and all alterations and modifications thereof falling within the scope of the present disclosure.

Obviously, those skilled in the art may alter or modify the present disclosure without departing from the spirit and scope of the present disclosure. Thus, if these alterations and modifications of the present disclosure fall within the scope of claims of the present disclosure and equivalent technologies thereof, the present disclosure is intended to cover these alterations and modifications.

## Claims

1. An application software displaying method, comprising:

    acquiring at least two parameter factors indicating application information about the application software within a set period;
    deriving a sorting factor for the application software by a calculation based on the at least two parameter factors acquired; and
    sorting the application software according to the sorting factor and presenting the application software sorted.

2. The method of claim 1, wherein the parameter factor comprises a download count factor;
   the acquiring parameter factors indicating application information about the application software within a set period comprises:

    acquiring a download count value of the application software within the set period, and performing a half-life processing of the download count value according to a half-life principle involving the download count factor of the application software, thus obtaining the download count factor indicating the application information about the application software within the set period.

3. The method of claim 2, wherein the acquiring a download count value of the application software within the set period comprises:

dividing the set period into a plurality of time slots and determining a download count value of the application software within each time slot acquired by the dividing;

the performing a half-life processing of the download count value according to the half-life principle involving the download count factor of the application software, thus obtaining the download count factor indicating the application information about the application software within the set period comprises:

determining a half-life value of the application software corresponding to each time slot;

deriving a download count factor of the application software within each time slot by a calculation based on the determined download count value of the application software within each time slot and a half-life value of the application software corresponding to each time slot; and

obtaining the download count factor indicating the application information of the application software within the set period according to the download count factor of the application software within each time slot derived by the calculation.

4. The method of claim 3, wherein the determining a download count value of the application software within each time slot acquired by the dividing comprises:

making a statistics of the download count value and a download link of the application software within each time slot acquired by the dividing, and adjusting the download count value obtained from the statistics according to the download link obtained from the statistics, thus obtaining the download count value of the application software within each time slot acquired by the dividing.

5. The method according to any one of claims 1-4, wherein the parameter information further comprises a scoring factor;

the acquiring parameter factors indicating application information about the application software within a set period comprises:

making a statistics of score values of the application software within the set period, and adjusting the score values obtained from the statistics according to a preset score threshold value, thus obtaining the scoring factor indicating the application information about the application software within the set period.

6. The method of claim 5, wherein the making a statistics of score values of the application software within the set period comprises:

receiving score values of the application software fed back from users within the set period, and deriving an average value of the score values of the application software within the set period by a calculation based on the score values received;

the adjusting the score values obtained from the statistics according to a preset score threshold value, thus obtaining the scoring factor indicating the application information about the application software within the set period comprises:

adjusting the average value according to the preset score threshold value of the application software set by default, thus obtaining the scoring factor indicating the application information about the application software within the set period.

7. The method of claim 6, wherein the adjusting the average value according to the preset score threshold value of the application software set by default, thus obtaining the scoring factor indicating the application information about the application software within the set period comprises:

taking a ratio of the average value to the score threshold value as the scoring factor indicating the application information about the application software within the set period; or

obtaining a reference score threshold value by adjusting the preset score threshold value of the application software set by default according to a preset coefficient;

comparing the average value with the reference score threshold value obtained; and

taking a first preset value as the scoring factor indicating the application information about the application software within the set period when the average value is not less than the reference score threshold value, and taking the ratio of the average value to the score threshold value as the scoring factor indicating the application information about the application software within the set period when the average value is less than the reference score threshold value.

8. The method of claim 1, wherein the deriving a sorting factor of the application software by a calculation based on the at least two parameter factors acquired comprises:

performing a multiplication of the at least two parameter factors and taking a value obtained by the multiplication as the sorting factor of the application software.

9. The method of claim 8, wherein the sorting the application software according to the sorting factor comprises:

sorting the application software according to a descending order of the sorting factor.

10. An application software displaying device, comprising:

an acquisition module, configured to acquire at least two parameter factors indicating application information about the application software within a set period;
a calculation module, configured to derive a sorting factor of the application software by a calculation based on the at least two parameter factors acquired; and
a sorting module, configured to sort the application software according to the sorting factor and present the application software sorted.

11. The displaying device of claim 10, wherein the parameter factor comprises a download count factor; and
the acquisition module is further configured to acquire a download count value of the application software within the set period, and performing a half-life processing of the download count value according to a half-life principle involving the download count factor of the application software, thus obtaining the download count factor indicating the application information about the application software within the set period.

12. The displaying device of claim 11, wherein:

the acquisition module is further configured to divide the set period into a plurality of time slots and determine a download count value of the application software within each time slot acquired by the dividing, to determine a half-life value of the application software corresponding to each time slot, to obtain a download count factor of the application software within each time slot by a calculation based on the determined download count value of the application software within each time slot and a half-life value of the application software corresponding to each time slot, and to obtain the download count factor indicating the application information of the application software within the set period according to the download count factor of the application software within each time slot derived by the calculation.

13. The displaying device according to claim 12, wherein:

the acquisition module is further configured to make a statistics of the download count value and a download link of the application software within each time slot acquired by the dividing, and adjust the download count value obtained from the statistics according to the download link obtained from the statistics, thus obtaining the download count value of the application software within each time slot acquired by the dividing.

14. The displaying device according to any one of claims 10~13, wherein the parameter information further comprises a scoring factor; and
the acquisition module is further configured to make a statistics of score values of the application software within the set period, and adjust the score values obtained from the statistics according to a preset score threshold value, thus obtaining the scoring factor indicating the application information about the application software within the set period.

15. The displaying device of claim 14, wherein:

the acquisition module is further configured to receive score values of the application software fed back from users within the set period, and derive an average value of the score values of the application software within the set period by a calculation based on the score values received, and to adjust the average value according to the preset score threshold value of the application software set by default, thus obtaining the scoring factor indicating the application information about the application software within the set period.

16. The displaying device of claim 15, wherein:

the acquisition module is further configured to take a ratio of the average value to the score threshold value as the scoring factor indicating the application information about the application software within the set period; or
to obtain a reference score threshold value by adjusting the preset score threshold value of the application software set by default according to a preset coefficient, to compare the average value with the reference score threshold value obtained, and to take a first preset value as the scoring factor indicating the application information about the application software within the set period when the average value is not less than the reference score threshold value, and take the ratio of the average value to the score threshold value as the scoring factor indicating the application information about the application software within the set period when the average value is less than the reference score threshold value.

17. The displaying device of claim 10, wherein:

the sorting module is further configured to perform a multiplication of the at least two parameter factors and taking a value obtained by the multiplication as the sorting factor of the application software.

18. The displaying device of claim 17, wherein:

the sorting module is further configured to sort the application software according to a descending order of the sorting factor.

101

Acquiring at least two parameter factors for indicating application information about an application program within a set time period

102

Deriving a sorting factor of the application program from a calculation based on the at least two parameter factors acquired

103

Sorting the application program according to the sorting factor and presenting the application program sorted

**Fig. 1**

201

Acquiring a download count factor for indicating downloads of an application program and a scoring factor for indicating use condition of the application program within a set time period

202

Deriving the sorting factor of the application program from a calculation based on the download count factor and the scoring factor of the application program acquired

203

Sorting the application program according to the sorting factor and presenting the application program sorted

**Fig. 2**

Fig. 3

Fig. 4

**Fig. 5**

**Fig. 6**

<table>
<tr><td colspan="2"><strong>INTERNATIONAL SEARCH REPORT</strong></td><td>International application No.<br><strong>PCT/CN2013/091003</strong></td></tr>
</table>

**A.   CLASSIFICATION OF SUBJECT MATTER**

See the extra sheet
According to International Patent Classification (IPC) or to both national classification and IPC

**B.   FIELDS SEARCHED**

Minimum documentation searched (classification system followed by classification symbols)

IPC: G06F 3/-; G06F 17/-

Documentation searched other than minimum documentation to the extent that such documents are included in the fields searched

Electronic data base consulted during the international search (name of data base and, where practicable, search terms used)

CPRS, CNKI, WPI, EPODOC: application, software, order+, sort+, download+, score, grade, mark, half decay, half-life, threshold, preset, predetermined, value, multipl+

**C.   DOCUMENTS CONSIDERED TO BE RELEVANT**

| Category* | Citation of document, with indication, where appropriate, of the relevant passages | Relevant to claim No. |
|---|---|---|
| X | CN 102360364 A (QIZHI SOFTWARE (BEIJING) CO., LTD.), 22 February 2012 (22.02.2012), description, paragraphs [0085]-[0144] | 1-2, 8-11, 17-18 |
| Y |  | 5, 14 |
| A |  | 3-4, 6-7, 12-13, 15-16 |
| Y | CN 103049452 A (BAIDU ONLINE NETWORK TECHNOLOGY (BEIJING) CO., LTD.), 17 April 2013 (17.04.201, )description, paragraphs [0065]-[0066] | 5, 14 |
| A | CN 102799635 A (TIANJIN UNIVERSITY), 28 November 2012 (28.11.2012), the whole document | 1-18 |
| P, X | CN 103235815 A (BEIJING XIAOMI TECHNOLOGY CO., LTD.), 07 August 2013 (07.08.2013), claims 1-18 | 1-18 |

☐ Further documents are listed in the continuation of Box C.        ☒ See patent family annex.

| | |
|---|---|
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 19 March 2014 (19.03.2014) | **03 April 2014 (03.04.2014)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**ZHU, Xiaoli**<br><br>Telephone No.: (86-10) **62411690** |

Form PCT/ISA/210 (second sheet) (July 2009)

# INTERNATIONAL SEARCH REPORT
## Information on patent family members

| International application No. |
| --- |
| **PCT/CN2013/091003** |

| Patent Documents referred in the Report | Publication Date | Patent Family | Publication Date |
| --- | --- | --- | --- |
| CN 102360364 A | 22.02.2012 | None | |
| CN 103049452 A | 17.04.2013 | None | |
| CN 102799635 A | 28.11.2012 | None | |
| CN 103235815 A | 07.08.2013 | None | |

Form PCT/ISA/210 (patent family annex) (July 2009)

# INTERNATIONAL SEARCH REPORT

International application No.

**PCT/CN2013/091003**

**CONTINUATION OF BOX A ON SECOND SHEET: CLASSIFICATION OF SUBJECT MATTER:**

G06F 3/048 (2013.01) i

G06F 17/30 (2006.01) n

Form PCT/ISA/210 (extra sheet) (July 2009)

**EP 2 958 001 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201310147875X